# EUROPÄISCHE PATENTSCHRIFT

(11) **EP 1 160 638 B1**
(45) Veröffentlichungstag und Bekanntmachung des Hinweises auf die Patenterteilung: **14.05.2003**
(21) Anmeldenummer: 01112213.2
(22) Anmeldetag: 18.05.2001
(51) Int. Cl.: G05D 16/06, F16K 1/44

(54) **Gasregelventil**
Gas control valve
Vanne de régulation pour gaz

(30) Priorität: 31.05.2000 DE 10027276
(43) Veröffentlichungstag der Anmeldung: 05.12.2001
(73) Patentinhaber: HONEYWELL B.V., 1101 EA Amsterdam Z.O. (NL)
(72) Erfinder: Pragt, Johan H., 7741 ZG Coevorden (NL); Baarda, Gerrit Jan, 7827 RE Emmen (NL)
(74) Vertreter: Leson, Thomas Johannes Alois, Dipl.-Ing.

(56) Entgegenhaltungen:
- EP-A- 0 631 075
- DE-A- 2 719 292
- FR-A- 1 496 822

## Beschreibung

Die Erfindung betrifft ein Regelventil gemäß dem Oberbegriff des Anspruchs 1.

Regelventile sind aus dem Stand der Technik hinlänglich bekannt. So wirkt bei bekannten Gasregelventilen üblicherweise ein aus elastischem Material - z.B. aus Gummi - gefertigter Ventilkörper gegen einen metallischen Ventilsitz. Die Elastizität des Ventilkörpers sorgt in Schließstellung des Gasregelventils für die Dichtheit desselben. Ein Steuerventil für einen Kühlmittelkreislauf einer Brennkraftmaschine ist aus der DE 31 01 248 A1 bekannt.

Die bekannten Gasregelventile weisen jedoch den Nachteil auf, dass sie für niedrige Modulationsbereiche nicht geeignet sind. Dies ergibt sich daraus, dass für die niedrigen Modulationsbereiche der Ventilkörper in kleinen Abmessungen ausgebildet werden muss und bei einer derart kleinen konstruktiven Ausgestaltung des Ventilkörpers derselbe seine Elastizität verliert. Die Elastizität des Materials, aus welchem der Ventilkörper gefertigt ist, bleibt zwar unverändert, die kleine konstruktive Ausgestaltung des Ventilkörpers vergrößert jedoch dessen Steifheit. Damit ist dann in Schließstellung des Gasregelventils die Dichtheit desselben nicht mehr gewährleistet.

Aus der DE-A-27 19 292 ist ein Regelventil bekannt, das einen ersten Ventilkörper aufweist, der zur Gewährleistung der Dichtheit des Regelventils in Schließstellung auf einem ersten Ventilsitz aufliegt. Bei diesem Regelventil ist koaxial zu dem ersten Ventilkörper ein zweiter Ventilkörper angeordnet, der zur Bereitstellung des gewünschten Modulationsbereiches eine kleinere wirksame Querschnittsfläche als der erste Ventilkörper aufweist. Der zweite Ventilkörper wirkt gegen einen entsprechend kleineren zweiten Ventilsitz und ist relativ zum ersten Ventilkörper in Axialrichtung verschiebbar.

Hiervon ausgehend liegt der vorliegenden Erfindung die Aufgabe zugrunde, ein neuartiges Regelventil zu schaffen, welches für kleine Modulationsbereiche geeignet ist.

Dieses Problem wird durch ein Regelventil mit den Merkmalen des Anspruchs 1 gelöst.

Weitere vorteilhafte Ausgestaltungen der Erfindung ergeben sich aus den Unteransprüchen und der Beschreibung. Nachfolgend wird ein bevorzugtes Ausführungsbeispiel, das als Gasregelventil ausgebildet ist, anhand der Zeichnung näher erläutert. In der Zeichnung zeigt:
Fig. 1 ein erfindungsgemäßes Gasregelventil im Querschnitt; und

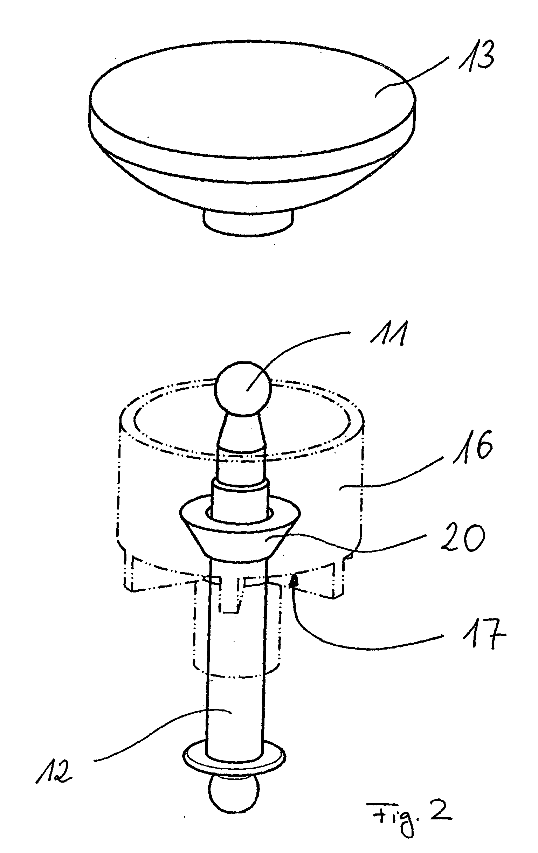

Fig. 2 einige Baugruppen des Gasregelventils der Fig. 1 in Explosionsdarstellung.

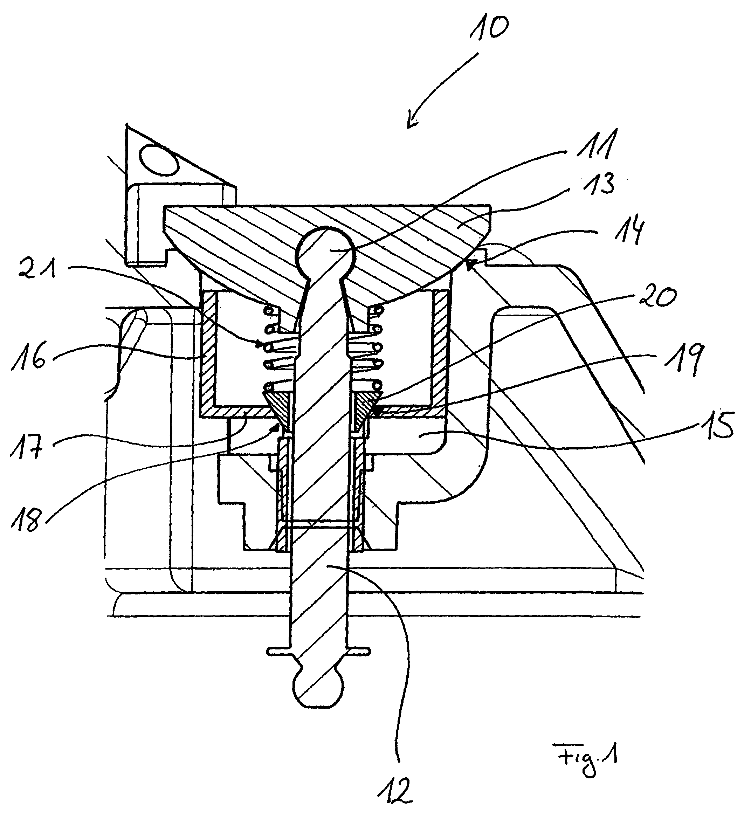

Figur 1 zeigt ein Gasregelventil 10 für einen niedrigen Modulationsbereich von vorzugsweise 1 kW bis 7 kW.

An einem oberen Ende 11 einer Ventilstange 12 verfügt das erfindungsgemäße Gasregelventil 10 über einen ersten Ventilkörper 13. Der Ventilkörper 13 ist aus elastischem Material, vorzugsweise aus Gummi hergestellt. Dieser erste Ventilkörper 13 wirkt gegen einen ersten Ventilsitz 14. In Schließstellung des Gasregelventils 10 liegt der erste Ventilkörper 13 dichtend auf dem ersten Ventilsitz 14 auf. Hierdurch wird die Dichtheit des erfindungsgemäßen Gasregelventils 10 in Schließstellung desselben gewährleistet.

In einer Kammer 15, die unterhalb des ersten Ventilkörpers 13 angeordnet ist, ist eine becherförmig ausgebildete Aufnahme 16 angeordnet. In einer Bodenfläche 17 der Aufnahme 16 ist eine Bohrung 18 vorgesehen, wobei die Umrandung der Bohrung 18 einen zweiten Ventilsitz 19 bildet. Gegen diesen zweiten Ventilsitz 19 wirkt ein zweiter Ventilkörper 20. Der zweite Ventilkörper 20 ist koaxial zum ersten Ventilkörper 13 angeordnet. Darüber hinaus verfügt der zweite Ventilkörper 20 zur Bereitstellung des gewünschten Modulationsbereichs über eine kleinere wirksame Querschnittsfläche als der erste Ventilkörper 13. Daraus folgt unmittelbar, daß auch der zweite Ventilsitz 19 kleinere konstruktive Abmessungen aufweisen muß als der erste Ventilsitz 14.

Gemäß Fig. 1 ist der zweite Ventilkörper 20 nicht fest mit der Ventilstange 12 verbunden. Vielmehr ist der zweite Ventilkörper 20 in Axialrichtung der Ventilstange 12 verschiebbar und damit auch relativ zum ersten Ventilkörper 13 verschiebbar ausgebildet. Zum Toleranzausgleich ist zwischen dem ersten Ventilkörper 13 und dem zweiten Ventilkörper 20 ein Federelement 21 angeordnet. Mit einem ersten Ende liegt das Federelement 21 auf dem ersten Ventilkörper 13 mit einem zweiten, gegenüberliegenden Ende auf dem zweiten Ventilkörper 20 auf. In dem Fall, in dem der Gasstrom in Schließrichtung der Ventilkörper 13, 20 auf dieselben einwirkt, kann auf das Federelement 21 verzichtet werden.

Bei dem erfindungsgemäßen Gasregelventil 10 wird demnach die eigentliche Regelung im gewünschten niedrigen Modulationsbereich vom zweiten Ventilkörper 20 vorgenommen, der gegen den zweiten Ventilsitz 19 wirkt. Aufgrund dessen, daß der Ventilkörper 20 zur Bereitstellung des gewünschten, niedrigen Modulationsbereichs geringe Abmessungen aufweist, kann das Material des Ventilkörpers 20 die Dichtheitsfunktion nicht mehr gewährleisten. Die Dichtheit des Gasventils 10 in Schließstellung desselben wird vom ersten Ventilkörper 13 übernommen, der gegen den ersten Ventilsitz 14 drückt und infolge seiner größeren Abmessungen die Dichtheit gewährleisten kann.

Mit Hilfe des erfindungsgemäßen Gasregelventils 10 ist es demnach auf besonders einfache konstruktive Weise möglich, Gasregelventile für sehr kleine Modulationsbereiche zur Verfügung zu stellen.

Auf die becherförmige Aufnahme 16 kann auch verzichtet werden, nämlich dann, wenn der zweite Ventilsitz 19 in integrierter Bauweise ausgestaltet ist. Mit der hier gezeigten separat ausgebildeten becherförmigen Aufnahme 16 sind jedoch bestehende Gasregelventile, die für gewünschte niedrige Modulationsbereiche nicht geeignet sind, einfach nachrüstbar bzw. umrüstbar.

Es sei angemerkt, daß die Form des zweiten Ventilkörpers 20 zur Gewährleistung einer bestimmten Öffnungscharakteristik und damit Regeleigenschaft angepaßt bzw. optimiert werden kann. Insbesondere kann die Form des zweiten Ventilkörpers 20 von der Form des ersten Ventilkörpers 13 abweichen.

Der Vollständigkeit halber sei hier angemerkt, daß das erfindungsgemäße Gasregelventil 10 üblicherweise Bestandteil einer in den Zeichnungen nicht weiter dargestellten Gasarmatur ist, die neben dem Gasregelventil 10 noch ein Sicherheitsventil umfaßt, wobei das Sicherheitsventil auch als Startgasventil bezeichnet wird. Dieses Sicherheitsventil ist mit Abstand vom erfindungsgemäßen Gasregelventil 10 in Strömungsrichtung vor dem Gasregelventil 10 positioniert.

### Bezugszeichenliste:

- 10: Gasregelventil
- 11: Ende
- 12: Ventilstange
- 13: Ventilkörper
- 14: Ventilsitz
- 15: Kammer
- 16: Aufnahme
- 17: Bodenfläche
- 18: Bohrung
- 19: Ventilsitz
- 20: Ventilkörper
- 21: Federelement

## Patentansprüche

1. Regelventil für niedrige Modulationsbereiche, mit einem ersten Ventilkörper (13), der zur Gewährleistung der Dichtheit des Regelventils (10) in Schließstellung auf einem ersten Ventilsitz (14) aufliegt, wobei koaxial zu dem ersten Ventilkörper (13) ein zweiter Ventilkörper (20) angeordnet ist, der zur Bereitstellung des gewünschten Modulationsbereichs eine kleinere wirksame Querschnittsfläche als der erste Ventilkörper (13) aufweist, wobei der zweite Ventilkörper (20) gegen einen entsprechend kleineren zweiten Ventilsitz (19) wirkt und relativ zum ersten Ventilkörper (13) in Axialrichtung verschiebbar ist,
**dadurch gekennzeichnet, dass**
der erste Ventilkörper (13) aus elastischem Material hergestellt ist und der erste Ventilkörper (13) zusammen mit dem ersten Ventilsitz (14) die Dichtungsfunktion für den zweiten Ventilkörper (20) übernimmt, wobei das Regelventil (10) als Gasregelventil ausgebildet ist und das Fluidum ein Gas ist.

2. Regelventil nach Anspruch 1, **dadurch gekennzeichnet, dass** zwischen dem ersten Ventilkörper (13) und dem zweiten Ventilkörper (20) ein Federelement (21) angeordnet ist, wobei das Federelement (21) mit einem ersten Ende auf dem ersten Ventilkörper (13) und mit einem zweiten Ende dem zweiten Ventilkörper (20) aufliegt.

3. Regelventil nach Anspruch 1 oder 2, **dadurch gekennzeichnet, dass** der erste Ventilkörper (13) fest mit einer Ventilstange (12) verbunden ist, und dass der zweite Ventilkörper (20) relativ zu der Ventilstange (12) und damit relativ zum ersten Ventilkörper (13) in Axialrichtung der Ventilstange (12) verschiebbar ist.

4. Regelventil nach einem oder mehreren der Ansprüche 1 bis 3, **dadurch gekennzeichnet, dass** in einer Kammer (15) des Regelventils (10) unterhalb des ersten Ventilkörpers (13) eine becherförmig ausgebildete Aufnahme (16) vorgesehen ist, wobei die Aufnahme (16) in einer Bodenfläche (17) eine Bohrung (18) aufweist, die den zweiten Ventilsitz (19) bildet.

5. Regelventil nach einem oder mehreren der Ansprüche 1 bis 4, **dadurch gekennzeichnet, dass** die Form des zweiten Ventilkörpers (20) hinsichtlich vorbestimmter Regeleigenschaften angepasst ist.

## Claims

1. Control valve for low modulation ranges, with a first closing component (13) which bears on a first valve seat (14) to keep the control valve (10) sealed in the closed position, a second closing component (20) which has a smaller effective cross-sectional area than the first closing component (13) so as to provide the desired modulation range being arranged coaxially with the first closing component (13), the second closing component (20) acting against a correspondingly smaller second valve seat (19) and being axially displaceable relative to the first closing component (13),
**characterized in that**
the first dosing component (13) is made of elastic material and the first closing component (13) together with the first valve seat (14) assumes the sealing function for the second closing component (20), the control valve (10) being configured as a gas control valve, and the fluid being a gas.

2. Control valve according to Claim 1, **characterized in that** a spring element (21) is arranged between the first closing component (13) and the second closing component (20), the spring element (21) bearing by one end on the first closing component (13) and by the other end on the second closing component (20).

3. Control valve according to Claim 1 or 2, **characterized in that** the first closing component (13) is fixedly connected to a valve rod (12), and **in that** the second closing component (20) is displaceable in the axial direction of the valve rod (12) relative to the valve rod (12) and hence relative to the first closing component (13).

4. Control valve according to one or more of Claims 1 to 3, **characterized in that** a cup-shaped holder (16) is provided in a chamber (15) of the control valve (10) underneath the first closing component (13), the holder (16) having in a bottom surface a hole (18) which forms the second valve seat (19).

5. Control valve according to one or more of Claims 1 to 4, **characterized in that** the shape of the second closing component (20) is adapted with a view to obtaining predetermined control characteristics.

## Revendications

1. Soupape de régulation pour des plages de modulation basses, comportant un premier corps de soupape (13) qui, pour garantir l'étanchéité de la soupape de régulation (10) en position fermée, est posé sur un premier siège de soupape (14), étant précisé qu'il est prévu, coaxialement par rapport au premier corps de soupape (13), un second corps de soupape (20) qui présente une surface de section transversale active plus petite que le premier corps de soupape (13) afin de fournir la plage de modulation souhaitée, le second corps de soupape (20) agissant contre un second siège de soupape (19) plus petit, en conséquence, et étant mobile dans le sens axial par rapport au premier corps de soupape (13),
**caractérisée en ce que** le premier corps de soupape (13) est fabriqué à partir d'une matière élastique, et avec le premier siège de soupape (14), il assure la fonction d'étanchéité pour le second corps de soupape (20), la soupape de régulation (10) étant conçue comme une soupape de régulation de gaz et le fluide étant un gaz.

2. Soupape de régulation de gaz selon la revendication 1, **caractérisée en ce qu'**un élément élastique (21) est disposé entre le premier corps de soupape (13) et le second corps de soupape (20), cet élément élastique (21) étant posé avec une première extrémité sur le premier corps de soupape (13), et avec une seconde extrémité sur le second corps de soupape (20).

3. Soupape de régulation selon la revendication 1 ou 2, **caractérisée en ce que** le premier corps de soupape (13) est solidaire d'une tige de soupape (12), et **en ce que** le second corps de soupape (20) est mobile dans le sens axial de la tige de soupape (12) par rapport à celle-ci et, ainsi, par rapport au premier corps de soupape (13)).

4. Soupape de régulation selon l'une au moins des revendications 1 à 3, **caractérisée en ce qu'**un logement en forme de godet (16) est prévu dans une chambre (15) de la soupape de régulation (10) située au-dessous du premier corps de soupape (13), ce logement (16) présentant dans une zone de fond (17) un perçage (18) qui forme le second siège de soupape (19).

5. Soupape de régulation selon l'une au moins des revendications 1 à 4, **caractérisée en ce que** la forme du second corps de soupape (20) est adaptée quant à des caractéristiques de régulation prédéfinies.
